# EUROPÄISCHE PATENTANMELDUNG

(11) **EP 2 098 772 A1**
(43) Veröffentlichungstag der Anmeldung: **09.09.2009**
(21) Anmeldenummer: 08018469.0
(22) Anmeldetag: 22.10.2008
(51) Int. Cl.: F16L 33/207, F16L 47/24, F16L 13/14

(54) **Vorrichtung für die gasdichte Verbindung einer Kunststoffleitung mit einer Stahlleitung**

(30) Priorität: 04.03.2008 DE 102008012498
(71) Anmelder: Jeschke, Immanuel, 31157 Sarstedt (DE)
(72) Erfinder: Jeschke, Immanuel, 31157 Sarstedt (DE)
(74) Vertreter: Junius, Walther

(57) **Zusammenfassung**

Die Erfindung betrifft eine Vorrichtung für die gasdichte Verbindung einer Kunststoffleitung mit einer Stahlleitung, bestehend aus zwei übereinander geschobenen Stahlrohren (2,4), zwischen die das Ende der Kunststoffleitung (1) eingelegt ist, wobei das eine Stahlrohr einen Vorsprung (10) trägt, der auf das Ende der Kunststoffleitung und eine im anderen Stahlrohr befindliche gleichgeformte Ausnehmung (5) gerichtet ist.

Es ist die Aufgabe der Erfindung, eine sicher wirkende Auszugsicherung zu schaffen.

Die Erfindung besteht darin,daß das innere Stahlrohr in einem Bereich außerhalb des Endes der Kunststoffleitung eine Nut (7) aufweist, in die ein nach innen gerichteter Vorsprung (8) am äußeren Stahlrohr beim Verpressen des äußeren Stahlrohres zum Zwecke der Durchmesserverringerung einfällt.

Diese Konstruktion ermöglicht eine exakte Lage des Vorsprunges über der Ausnehmung bei der Montage und anschließenden Verpressung, zugleich legt sie das äußere Stahlrohr derart fest, daß es sich nicht bewegen kann, selbst wenn das Ende der Kunststoffleitung unter dem Einfluß sehr starker Zugkräfte sich aus der Verbindungsstelle herauszuziehen bestrebt ist. So ist das Ende der Kunststoffleitung beidseitig in den beiden fest miteinander durch den nach innen gerichteten Vorsprung am äußeren Stahlrohr verbundenen Stahlrohren eingeklemmt.

## Beschreibung

Die Erfindung betrifft eine Vorrichtung für die gasdichte Verbindung einer Kunststoffleitung mit einer Stahlleitung, bestehend aus zwei übereinander geschobenen Stahlrohren, zwischen die das Ende der Kunststoffleitung eingelegt ist, wonach das äußere Stahlrohr unter Durchmesserverminderung auf das innere Stahlrohr und das Ende der Kunststoffleitung gepreßt ist, wobei das eine der beiden Stahlrohre einen Vorsprung trägt, der auf das Ende der Kunststoffleitung und eine im anderen Stahlrohr befindliche gleichgeformte Ausnehmung gerichtet ist.

Der Vorsprung auf dem einen Stahlrohr und die gleichgeformte Ausnehmung im anderen Stahlrohr dienen als Auszugssicherung für das Ende des Kunststoffrohres aus dieser Verbindungsstelle von Stahl- und Kunststoffleitung, die insbesondere dann die feste Verbindung der beiden Leitungen gewährleisten muß, wenn die Leitungen dem Transport von Gas dienen und starke äußere Zugkräfte an der Kunststoffleitung wirken, wie sie an einer erdverlegten Kunststoffleitung bei in ihrer Nähe ausgeführten Baggerarbeiten auftreten können. Bisher eingesetzte Auszugssicherungen (DE 100 19 928.3) erfüllen die an sie gestellten Anforderungen nicht immer. Das liegt teils an einer ungenauen Montage, bei der der Vorsprung nicht exakt über der Ausnehmung liegt, teils an der Möglichkeit einer unerwünschten Verschiebung des äußeren Rohres beim Auftreten der genannten Zugkräfte.

Die Erfindung vermeidet die Nachteile des Standes der Technik. Es ist die Aufgabe der Erfindung, eine sicher wirkende Auszugsicherung zu schaffen.

Die Erfindung besteht darin, daß das innere Stahlrohr in einem Bereich außerhalb des Endes der Kunststoffleitung eine Nut aufweist, in die ein nach innen gerichteter Vorsprung am äußeren Stahlrohr beim Verpressen des äußeren Stahlrohres zum Zwecke der Durchmesserverringerung einfällt.

Diese Konstruktion ermöglicht eine exakte Lage des Vorsprunges über der Ausnehmung bei der Montage und anschließenden Verpressung, zugleich legt sie das das äußere Stahlrohr derart fest, daß es sich nicht bewegen kann, selbst wenn das Ende der Kunststoffleitung unter dem Einfluß sehr starker Zugkräfte sich aus der Verbindungsstelle herauszuziehen bestrebt ist. So ist das das Ende der Kunststoffleitung beidseitig in den beiden fest miteinander durch den nach innen gerichteten Vorsprung am äußeren Stahlrohr verbundenen Stahlrohren eingeklemmt.

Diese feste Verbindung der beiden Stahlrohre läßt sich dadurch besonders exakt herstellen, daß neben der Nut im inneren Stahlrohr auf der der Kunststoffleitung abgewandten Seite ein die Verschiebung des äußeren Stahlrohres begrenzender Wulst angeordnet ist.

Als günstig für die Montage hat es sich erwiesen, wenn die Nut auf dem Inneren Stahlrohr und der nach innen gerichtete Vorsprung am Ende des äußeren Rohres einen trapezförmigen Querschnitt aufweisen.

Um eine in jedem Fall gasdichte Verbindung zwischen der Kunststoff und der Stahlleitung herzustellen ist es zweckmäßig, daß das innere Stahlrohr mindestens eine Nut an seinem äußeren Umfang für die Aufnahme eines Dichtringes aufweist.

Für die weitere Verbindung der erfindungsgemäßen Vorrichtung mit einer weiterführenden Anschlußleitung kann es vorteilhaft sein, daß das innere Stahlrohr mit einem Flansch oder einem Gewinde an seinem aus der Kunststoffleitung herausstehenden Ende versehen ist.

Das Wesen der Erfindung ist nachstehen anhand von in der Zeichnung schematisch dargestellten Ausführungsbeispielen näher erläutert. Es zeigen:
Fig.1 eine Verbindungsstelle vor dem Verpressen im Schnitt.
Fig.2 diese Verbindungsstelle vor dem Verpressen im Schnitt.
Fig.3 eine andere Verbindungsstelle vor dem Verpressen im Schnitt.
Fig.4 diese Verbindungsstelle vor dem Verpressen im Schnitt.

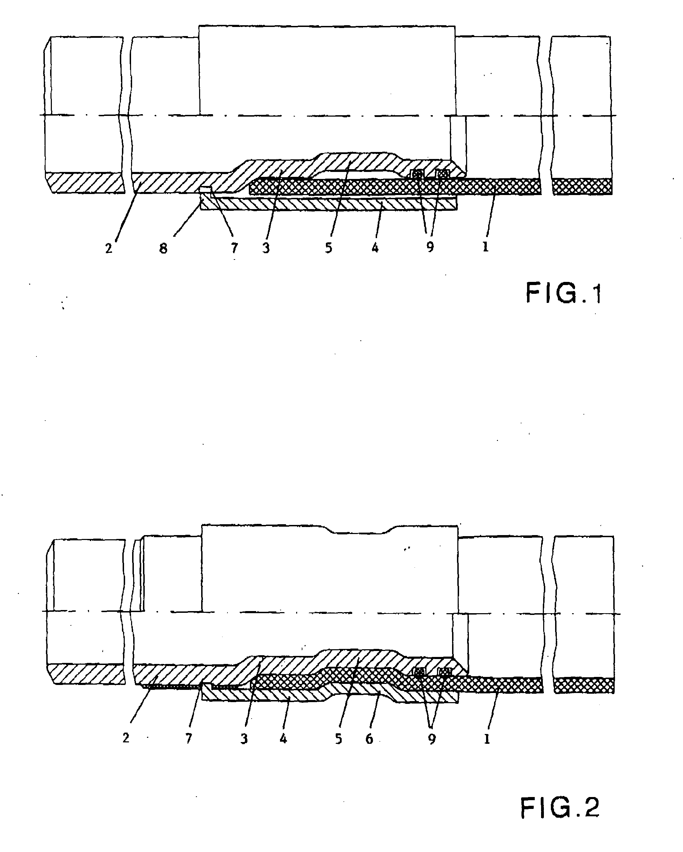

Die in Fig.1 dargestellte Vorrichtung für die gasdichte Verbindung einer Kunststoffleitung 1 mit einer Stahlleitung 2 besteht aus dem Endstück 3 des Stahlrohres 2 und einer darüber geschobenen kurzen Stahlrohrhülse 4, zwischen die das Ende der Kunststoffleitung 1 so eingelegt ist, daß das Ende der Kunststoffleitung 1 fest und dicht auf dem Endstück 3 des Stahlrohres 2 sitzt. Das Endstück 3 des Stahlrohres 2 weist etwa mittig eine (Durchmesser-) Verengung in Form einer Nut 5 auf. Zur Fertigstellung der Vorrichtung für die gasdichte Verbindung wird außen an der kurzen Stahlrohrhülse 4 eine Walzvorrichtung angelegt, mit deren Hilfe in die kurze Stahlrohrhülse 4 eine Nut 6 über der Nut 5 eingewalzt wird. Das Ende der Kunststoffleitung 1 liegt dann eingeklemmt zwischen den beiden Nuten 4,5 und kann aus dieser eingeklemmten Stellung nicht entweichen.

Das innere Strahlrohr 2 dieser Verbindungsstelle von Stahl- und Kunststoffrohr weist in einem Bereich außerhalb des Endes der Kunststoffleitung 1 eine Nut 7 auf, in die ein nach innen gerichteter Vorsprung 8 an der äußeren kurzen Stahlrohrhülse 4 beim Verpressen dieser äußeren Stahlrohrhülse 4 zum Zwecke der Durchmesserverringerung am Ort einfällt. Zwei Dichtringe 9 auf dem Ende des Stahlrohres 2 verbessern die Abdichtung.

Durch diese Konstruktion sitzt die Stahlrohrhülse 4 unverrückbar auf dem Stahlrohr 2 fest, die Kunststoffleitung 1 ist dadurch beidseitig an der Innen- und an der Außenseite eingespannt, der Reibungswiderstand gegen ein Herausziehen ist dadurch verdoppelt.

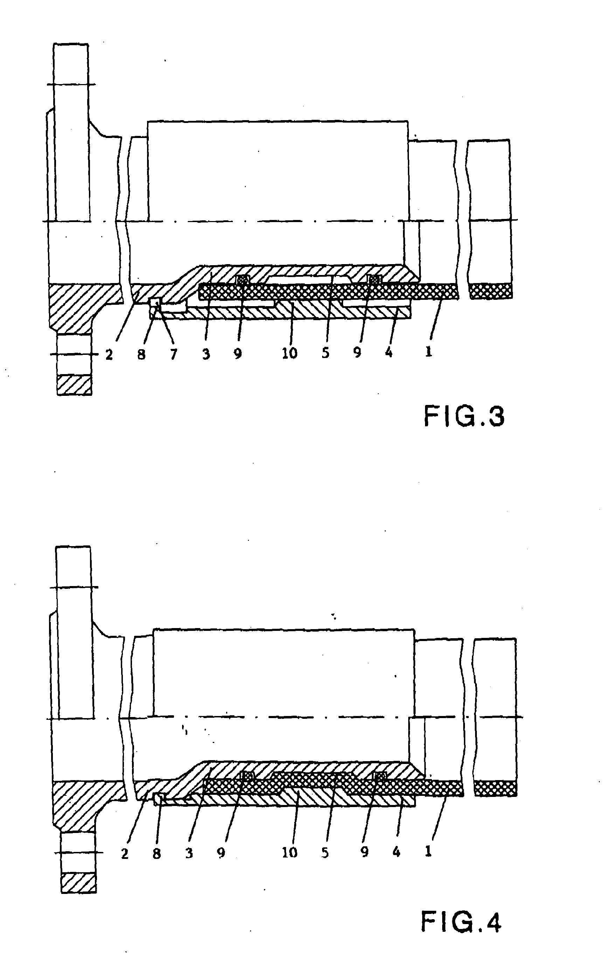

Im Ausführungsbeispiel der Fig.3 und 4 ist die Stahlrohrhülse 4 sowohl mit einem nach innen gerichteter Vorsprung 7 als auch mit einem nach innen gerichteten Vorsprung 10 ausgestattet, der beim Walzen der Hülse 4 und der dabei stattfindenden Durchmesserverkleinerung der Hülse 4 zusammen mit der Kunststoffleitung 1 in die Nut 5 hineingedrückt wird.

### Liste der Bezugszeichen

- 1: Kunststoffleitung
- 2: Stahlrohr
- 3: Endstück des Stahlrohres
- 4: Hülse
- 5: Nut im Endstück des Stahlrohres
- 6: eingewalzte Nut im Endstück des Stahlrohres
- 7: Nut zur Festlegung der Stahlrohrhülse
- 8: nach innen gerichteter Vorsprung der Stahlrohrhülse
- 9: Dichtring
- 10: Vorsprung

## Patentansprüche

1. Vorrichtung für die gasdichte Verbindung einer Kunststoffleitung mit einer Stahlleitung,
bestehend aus zwei übereinander geschobenen Stahlrohren, zwischen die das Ende der Kunststoffleitung eingelegt ist,
wobei das eine Stahlrohr einen Vorsprung trägt, der auf das Ende der Kunststoffleitung und eine im anderen Stahlrohr befindliche gleichgeformte Ausnehmung gerichtet ist,
**dadurch gekennzeichnet,**
**daß** das innere Stahlrohr in einem Bereich außerhalb des Endes der Kunststoffleitung eine Nut aufweist, in die ein nach innen gerichteter Vorsprung am äußeren Stahlrohr beim Verpressen des äußeren Stahlrohres zum Zwecke der Durchmesserverringerung einfällt.

2. Vorrichtung nach Anspruch 1,
**dadurch gekennzeichnet,**
**daß** neben der Nut im inneren Stahlrohr auf der der Kunststoffleitung abgewandten Seite ein die Verschiebung des äußeren Stahlrohres begrenzender Wulst angeordnet ist.

3. Vorrichtung nach Anspruch 1,
**dadurch gekennzeichnet,**
**daß** die Nut auf dem Inneren Stahlrohr und der nach innen gerichteter Vorsprung am Ende des äußeren Rohres einen trapezförmigen Querschnitt aufweisen.

4. Vorrichtung nach Anspruch 1,
**dadurch gekennzeichnet,**
**daß** das innere Stahlrohr mindestens eine Nut an seinem äußeren Umfang für die Aufnahme eines Dichtringes aufweist.

5. Vorrichtung nach Anspruch 1,
**dadurch gekennzeichnet,**
**daß** das innere Stahlrohr mit einem Flansch oder einem Gewinde an seinem aus der Kunststoffleitung herausstehenden Ende versehen ist.
